Europäisches Patentamt

(19) European Patent Office

Office européen des brevets

(11) Numéro de publication: **0 106 135**
**B1**

(12) **FASCICULE DE BREVET EUROPEEN**

(51) Int. Cl.⁴: **G 01 J 3/46, G 01 N 21/55**

(45) Date de publication du fascicule du brevet:
**22.06.88**

(21) Numéro de dépôt: **83108901.6**

(22) Date de dépôt: **09.09.83**

(54) **Procédé et appareil de mesure de la brillance d'une couleur.**

(30) Priorité: **14.10.82 CH 5995/82**

(43) Date de publication de la demande:
**25.04.84 Bulletin 84/17**

(45) Mention de la délivrance du brevet:
**22.06.88 Bulletin 88/25**

(84) Etats contractants désignés:
**AT DE FR IT NL**

(56) Documents cités:
**GB - A - 1 122 031**
**GB - A - 2 054 845**
**US - A - 3 573 476**
**US - A - 3 735 143**
**US - A - 3 817 628**
**US - A - 3 955 096**

**PATENTS ABSTRACTS OF JAPAN, vol. 5, no. 84
(P-64)(756), 1981**

(73) Titulaire: **SOCIETE DES PRODUITS NESTLE S.A., Case
postale 353, CH-1800 Vevey (CH)**

(72) Inventeur: **Cabi-Akman, Robert, Rue de la Riaz 15,
CH-1026 Echandens (CH)**
Inventeur: **Simond, Rémy, Chemin de Muraz 19,
CH-1814 La Tour-de-Peilz (CH)**
Inventeur: **Sprenger, Arthur, Sentier de la Scie 6,
CH-1806 Saint-Legier (CH)**

## Description

La présente invention a pour objet un procédé de mesure de la brillance d'une couleur par comparaison.

La présente invention a également pour objet un appareil de mesure de la brillance d'une couleur par comparaison, comportant une source de lumière, un dispositif optique pour former et diriger un faisceau lumineux incident sur un échantillon à mesurer et sur une référence de couleur, un photodétecteur pour produire des signaux électriques en réponse à la détection de faisceaux lumineux réfléchis par l'échantillon et la référence, et circuit électronique pour traiter et comparer lesdits signaux électriques.

On connaît divers procédés et divers appareils de mesure de la couleur basés sur le principe de la comparaison p.ex. entre une référence de couleur et un échantillon à mesurer. Certains sont destinés à une mesure véritable de la couleur en analysant ses composantes selon un système internationalement répandu tel que le système Munsell p.ex. où l'on définit une couleur par sa teinte, sa brillance et sa saturation. D'autres sont destinés à la régulation d'installations industrielles ou d'appareils en fonction de la couleur des produits obtenus ou au tri de produits de couleur variable p.ex. Dans ces cas, une mesure véritable ou complète de la couleur n'est souvent pas adéquate et l'on connaît des procédés et appareils basés sur la mesure d'une seule composante de la couleur, p.ex. sa brillance ou sa teinte.

Mais, d'une manière générale, qu'il s'agisse d'une mesure de la couleur complète ou d'une seule de ses composantes, on constate que la manipulation des appareils connus même les plus perfectionnés et les plus modernes pourrait être rendue encore plus aisée.

En effet, dans un colorimètre connu récent, avant d'effectuer une mesure de couleur par comparaison, il faut introduire une référence de couleur connue dans l'appareil, laisser l'appareil effectuer l'analyse de la référence et sa mémorisation, puis introduire l'échantillon de couleur «inconnue» pour obtenir la détermination de sa couleur.

Et dans un colorimètre connu d'un autre type, comprenant une source de lumière, un dispositif optique pour créer deux faisceaux lumineux à partir de cette source, et deux phototubes pour détecter les deux faisceaux réfléchis par un échantillon d'une part et par une référence de couleur d'autre part, l'opérateur doit constamment maintenir lui-même l'équilibrage du circuit reliant les deux phototubes pour que la comparaison des deux mesures soit valable.

Pour certaines mesures de routine portant sur des couleurs toujours semblables, ou pour certains processus de régulation ou de tri p.ex., il serait utile de disposer d'un procédé et d'un appareil permettant de réaliser pratiquement en permanence la mesure par comparaison sans que l'opérateur doive actionner le moindre bouton de réglage ou d'équilibrage et sans qu'il ait à réaliser des étalonnages trop fréquents.

La présente invention a pour but de proposer un procédé et un appareil simples, adaptés à la mesure de la seule brillance d'une couleur et basés sur le principe d'une comparaison automatique et pratiquement permanente.

A cet effet, le procédé selon la présente invention est caractérisé par le fait que l'on expose successivement et cycliquement à un même faisceau lumineux incident un échantillon à mesurer, une référence noire et au moins une référence de couleur semblable à celle de l'échantillon, on détecte photoélectriquement des faisceaux lumineux réfléchis successivement par l'échantillon et les références, on établit électroniquement le rapport des intensités des faisceaux lumineux réfléchis par l'échantillon et une couleur de référence d'une part ainsi que par la référence noire et une couleur de référence d'autre part, on soustrait électroniquement le second rapport du premier et l'on obtient automatiquement à chaque cycle d'exposition ou mesure, à une fréquence de mesure déterminée, une différence directement proportionnelle à la brillance de la couleur de l'échantillon.

De même, l'appareil selon la présente invention est caractérisé par le fait qu'il comprend une référence noire et au moins une référence de couleur semblable à celle de l'échantillon, un dispositif d'exposition pour exposer successivement et cycliquement au faisceau lumineux incident l'échantillon, la référence noire et la référence de couleur, deux circuits électroniques de comparaison pour établir les rapports des intensités des faisceaux lumineux réfléchis par l'échantillon et une couleur de référence d'une part ainsi que par la référence noire et une couleur de référence d'autre part, et un circuit électronique de soustraction pour établir à chaque cycle d'exposition ou mesure une différence entre ces deux rapports directement proportionnelle à la brillance de la couleur de l'échantillon.

La notion de brillance d'une couleur est utilisée dans le présent exposé dans le sens qui lui est donné dans le système «Munsell» cité ci-dessus. La brillance correspond à l'intensité lumineuse d'une couleur, par opposition à sa teinte caractérisée par une longueur d'onde dominante ainsi qu'à sa saturation ou pureté. La brillance est l'équivalent de la composante Y, obtenue à travers un filtre vert, dans le système CIE (Commission Internationale de l'Eclairage) où les composantes trichromatiques X, Y et Z de la couleur sont définies par la quantité de lumière passant à travers des filtres rouge, vert et bleu.

Les présents procédés et appareils permettent donc de déterminer cycliquement, à une fréquence de mesure déterminée, une grandeur directement proportionnelle à la brillance de la couleur de l'échantillon. En effet, en établissant le rapport des intensités des faisceaux lumineux réfléchis par l'échantillon et une couleur de référence, on élimine toutes les variations proportionnelles des intensités, en particulier celles dues à l'échauffement et au vieillissement de certains éléments tels que source de lumière et photodétecteur ou certains circuits électroniques utilisés pour la mise en œuvre du procédé ou dans la construction de l'appareil. Et en établissant la différence entre ce premier rapport et le rapport des intensités des faisceaux réfléchis par la référence noire et une couleur de référence, on élimine l'effet de rayons lumineux parasites réfléchis par autre chose que l'échantillon ou les références.

Si l'on reporte graphiquement en ordonnée la brillance de la couleur et en abscisse la grandeur déterminée par le présent procédé, on obtient une droite montante dont la pente peut être modifiée en multipliant électroniquement le premier rapport par une première constante et dont l'origine peut être déplacée en multipliant électroniquement le second rapport par une seconde constante. Une fois la pente et l'origine de la droite fixées, celle-ci ne bouge plus au cours des mesures, tout écart dû aux causes évoquées ci-dessus étant automatiquement compensé et éliminé à chaque cycle. On peut donc dire qu'une calibration et une mise à zéro sont ainsi réalisées automatiquement à chaque cycle de mesure à partir d'une comparaison avec une référence noire et au moins une référence de couleur.

De préférence, on utilise même deux références de couleurs semblables de brillances respectives élevée et moyenne connues et l'on établit le rapport des intensités des faisceaux lumineux réfléchis par l'échantillon et la référence de couleur de brillance élevée d'une part ainsi que par la référence noire et la référence de couleur de brillance moyenne d'autre part. Il est possible ainsi de mieux maîtriser encore la proportionnalité directe entre la grandeur déterminée par le présent procédé et la brillance de la couleur de l'échantillon. En effet, on agit ainsi plus spécifiquement et avec plus de précision sur chacun des paramètres en cause, étant donné que le contrôle de la pente de la droite évoquée ci-dessus sera plus précis s'il est effectué par rapport à une référence de couleur de brillance élevée (située dans le haut de la droite) alors que le contrôle de l'origine de cette droite sera plus précis s'il est effectué par rapport à une référence de couleur de brillance moyenne (située dans le bas de la droite).

Dans une forme d'exécution préférée du procédé et de l'appareil, l'on hâche le faisceau lumineux incident à une fréquence de hâchage déterminée et, après la détection photoélectronique, l'on élimine les signaux électriques dont la fréquence diffère de la fréquence de hâchage. Cette précaution est particulièrement destinée à l'élimination de signaux parasitiques d'origine externe telle que lumière ambiante naturelle (composante d'intensité constante) ou artificielle (composante d'intensité oscillant à une fréquence double de celle du réseau).

L'appareil selon la présente invention est décrit plus en détail ci-après en référence au dessin ci-joint donné à titre d'exemple et dans lequel

– la figure 1 est un schéma d'une forme d'exécution de l'appareil, où les dispositifs optiques et mécaniques sont représentés en coupe,

– la figure 2 représente un disque d'exposition,

– la figure 3 représente un disque de synchronisation,

– la figure 4 représente un disque de hâchage, et

– la figure 5 est un schéma bloc des circuits électroniques de comparaison et de soustraction.

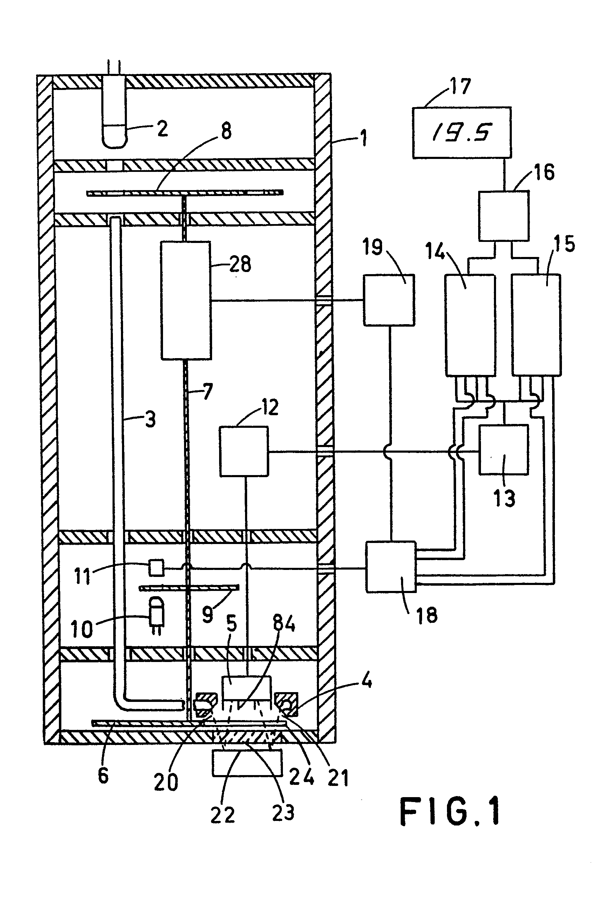

L'appareil représenté schématiquement à la figure 1 comprend, dans un boîtier 1 étanche à la lumière, une source de lumière 2, un dispositif optique 3, 4, un photodétecteur 5 et un dispositif d'exposition 6. Dans la forme d'exécution représentée à cette figure, le boîtier 1 comprend en outre un dispositif de hâchage de lumière 8 et un dispositif de synchronisation 9, 10, 11.

En ce qui concerne la partie électronique, celle-ci comprend un circuit d'amplification 12 dans le boîtier 1 et, en dehors du boîtier, un circuit de démodulation 13, deux circuits de comparaison 14, 15, un circuit de soustraction 16, un dispositif d'affichage numérique 17, un circuit de synchronisation 18 et un circuit de régulation 19.

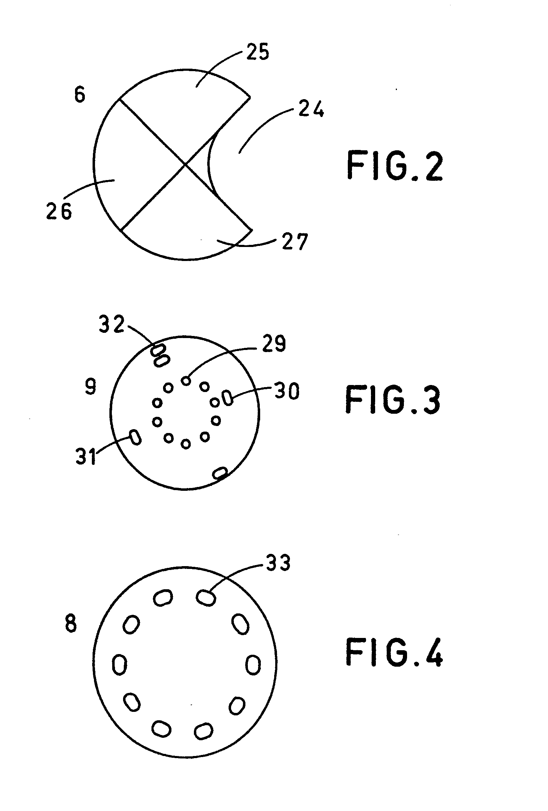

L'appareil est destiné à fonctionner comme suit. La lumière de la source 2, par exemple une lampe à halogène, est conduite par des fibres optiques 3 à un répartiteur annulaire 4 qui forme un faisceau lumineux incident conique ou à plusieurs rayons convergeants 20, 21, à savoir quelques rayons définissant quelques positions de la directrice d'un même cône. Les faisceaux réfléchis par la surface de mesure 22 (et 25–27 fig. 2) sont détectés par le photodétecteur 5, p. ex. une cellule photovoltaïque au silicium, placé au centre du répartiteur 4. Une grille 84 est prévue devant le photodétecteur 5 pour intercepter les rayons lumineux ne provenant pas de la surface de mesure.

Dans sa forme d'exécution représentée à la fig. 2, le dispositif d'exposition est réalisé sous forme de disque rotatif 6 divisé en un secteur ouvert 24, un secteur de référence noire 25 et deux secteurs de référence de couleurs semblables de brillances respectives moyenne 26 et élevée 27. Ce disque rotatif 6 est fixé à l'extrémité de l'axe 7 entraîné par le moteur 28 (M) à une vitesse de rotation qui, exprimée en tours/s (Hertz), représente la fréquence de mesure. Lorsque le secteur ouvert 24 passe au-dessus de la fenêtre 23, le faisceau lumineux est réfléchi par l'échantillon 22. Puis, le faisceau lumineux est réfléchi par la référence noire 25 et les références de couleur 26, 27 lorsque les secteurs portant ces références viennent successivement se glisser entre la fenêtre 23 et le photodétecteur 5. La fréquence de mesure peut être de l'ordre de 1 Hertz p. ex. Elle est réglée par l'intermédiaire du dispositif de synchronisation.

Dans sa forme d'exécution représentée à la fig. 3, le dispositif de synchronisation est réalisé sous forme de disque de synchronisation 9 percé de trous 29–32. Ce disque rotatif 9 est également fixé à l'axe 7 entraîné par le moteur 28. Ses trous sont destinés à passer à ladite fréquence de mesure entre au moins une source lumineuse auxiliaire 10 et au moins un photodétecteur auxiliaire 11 pour produire des signaux électriques de synchronisation. Dans la forme d'exécution représentée à la fig. 3, les trous sont disposés sur 4 cercles concentriques. A chaque cercle correspond une paire source lumineuse auxiliaire-photodétecteur auxiliaire, p.ex. une paire diode émettrice-phototransistor.

Les signaux émis correspondant aux trous 29 situés sur le cercle le plus au centre du disque sont destinés à la régulation des moyens d'entraînement 7, 28 du dispositif d'exposition 6. Ces signaux sont traités par le circuit de synchronisation 18 puis par le circuit de régulation 19 qui commande le moteur 28.

Les signaux émis correspondant aux trous 30, 31, 32, situés sur les cercles suivants sont destinés à la synchronisation desdits circuits électroniques de comparaison 14 et 15 par l'intermédiaire du circuit de synchronisation 18.

La fig. 4 représente une forme d'exécution du dispositif de hâchage de lumière, à savoir un disque rotatif de hâchage 8 percé de nombreuses ouvertures 33 disposées en cercle. Ce disque est également entraîné par le moteur 28, mais à un multiple de la vitesse de rotation de l'axe 7, de manière à alternativement couper et laisser passer la lumière de la source lumineuse 2 à une fréquence de hâchage relativement élevée. Si l'on désire une fréquence de hâchage de 200 Hertz p.ex., et que le disque présente 10 ouvertures comme sur la fig. 4, on fera tourner le disque de hâchage 20 fois plus vite que le disque de mesure si ce dernier est réglé à une fréquence de 1 Hertz p.ex.

Lesdits circuits d'amplification 12 et de démodulation 13 traitent l'un après l'autre les signaux électriques délivrés par le photodétecteur 5. Le circuit d'amplification 12 est de préférence disposé dans le boîtier 1 de l'appareil afin d'éviter toute perturbation parasite des signaux de très faible intensité en provenance du photodétecteur 5 lors de leur transport à un boîtier extérieur renfermant les divers circuits électroniques. Le circuit de démodulation 13 a pour fonction de rétablir des niveaux de tension constants correspondant à l'intensité des faisceaux lumineux réfléchis, à partir des impulsions qui lui parviennent à la fréquence de hâchage. Tout signal dont la fréquence diffère de la fréquence de hâchage est éliminé au niveau de ces deux circuits d'amplification 12 et de démodulation 13.

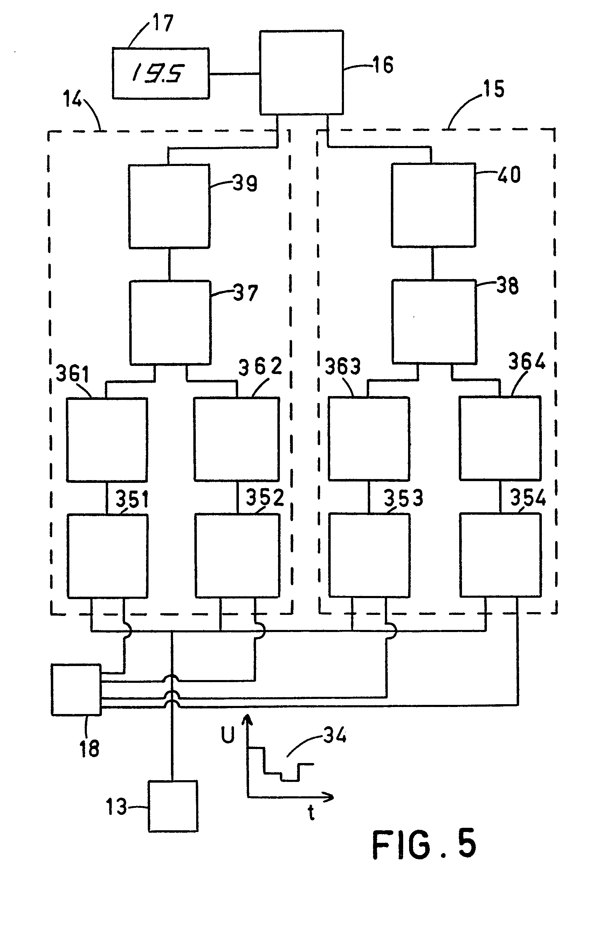

La conception et le fonctionnement des circuits de comparaison et de soustraction 14, 15 et 16 seront décrits ci-après en référence à la fig. 5 qui représente un schéma bloc des circuits de comparaison. Les signaux périodiques démodulés en provenance du circuit de démodulation 13 ont la forme indiquée en 34, à savoir quatre niveaux de tension distincts correspondant aux intensités des faisceaux lumineux réfléchis par l'échantillon et les références. Ces niveaux sont séparés et maintenus constants chacun durant un tour complet du disque d'exposition 6 dans quatre circuits séparateurs 351–354 en synchronisme avec les signaux provenant du disque de synchronisation 9 repérant le passage des secteurs du disque d'exposition 6, signaux traités et transmis auxdits circuits séparateurs par le circuit de synchronisation 18.

A la sortie des quatre circuits séparateurs on a quatre tensions distinctes que l'on convertit en quatre fréquences distinctes dans quatre circuits convertisseurs 361–364 pour augmenter la précision et la stabilité des opérations subséquentes. On opère ensuite la comparaison, à savoir on établit le rapport de ces fréquences deux à deux dans 2 circuits diviseurs 37 et 38 conçus chacun sur le principe du comptage d'une fréquence sur un compteur (non représenté) et du décomptage de l'autre fréquence sur un second compteur (non représenté) au rythme d'une fréquence de référence fournie par une horloge (non représentée).

Les deux fréquences relativement réduites résultant de l'établissement des deux rapports dans les circuits diviseurs 37 et 38 sont ensuite multipliées chacune par un même facteur dans 2 circuits multiplicateurs 39 et 40 afin de retrouver un niveau de fréquence plus élevé.

Les deux fréquences délivrées par les circuits 39 et 40 sont proportionnelles aux rapports des intensités des faisceaux lumineux réfléchis par l'échantillon et la référence de couleur de brillance élevée d'une part et par la référence noire et la référence de couleur de brillance moyenne d'autre part. La seconde de ces fréquences est alors soustraite de la première dans le circuit de soustraction 16 conçu sur le principe du comptage d'une fréquence et du décomptage de l'autre fréquence sur un même compteur (non représenté) au rythme d'une autre fréquence de référence fournie par une horloge (non représentée).

La différence obtenue ainsi au rythme de la fréquence de mesure est directement proportionnelle à la brillance de la couleur de l'échantillon. Elle est envoyée sur un circuit décodeur compris dans le dispositif d'affichage 17 qui permet d'afficher en permanence une valeur, déterminée à chaque cycle de mesure, directement proportionnelle à la brillance de la couleur de l'échantillon.

**Revendications**

1. Procédé de mesure de la brillance d'une couleur par comparaison, caractérisé par le fait que l'on expose successivement et cycliquement à un même faisceau lumineux incident un échantillon à mesurer, une référence noire et au moins une référence de couleur semblable à celle de l'échantillon, on détecte photoélectriquement des faisceaux lumineux réfléchis successivement par l'échantillon et les références, on établit électroniquement le rapport des intensités des faisceaux lumineux réfléchis par l'échantillon et une couleur de référence d'une part ainsi que par la référence noire et une couleur de référence d'autre part, on soustrait électroniquement le second rapport du premier et l'on obtient automatiquement à chaque cycle d'exposition ou mesure, à une fréquence de mesure déterminée, une différence directement proportionnelle à la brillance de la couleur de l'échantillon.

2. Procédé selon la revendication 1, caractérisé par le fait que l'on utilise deux références de couleurs semblables de brillances respectives élevée et moyenne et l'on établit le rapport des intensités des faisceaux lumineux réfléchis par l'échantillon et la référence de couleur de brillance élevée d'une part ainsi que par la référence noire et la référence de couleur de brillance moyenne d'autre part.

3. Procédé selon la revendication 1, caractérisé par le fait que l'on hâche le faisceau lumineux incident à une fréquence de hâchage déterminée et, après la détection photoélectronique, l'on élimine les signaux électriques dont la fréquence diffère de la fréquence de hâchage.

4. Appareil de mesure de la brillance d'une couleur par comparaison, comportant une source de lumière (2), un dispositif optique (3, 4) pour former et diriger un faisceau lumineux incident sur un échantillon à mesurer (22) et sur une référence de couleur, un photodétecteur (5) pour produire des signaux électriques en réponse à la détection de faisceaux lumineux réfléchis par l'échantillon et la référence, et un circuit électronique pour traiter et comparer lesdits signaux électriques, caractérisé par le fait qu'il comprend une référence noire (25) et au moins une référence de couleur (26, 27) semblable à celle de l'échantillon, un dispositif d'exposition (6) pour exposer successivement et cycliquement au faisceau lumineux incident l'échantillon (22), la référence noire (25) et la référence de couleur (26, 27), deux circuits électroniques de comparaison (14, 15) pour établir les rapports des intensités des faisceaux lumineux réfléchis par l'échantillon et une couleur de référence d'une part ainsi que par la référence noire et une couleur de référence d'autre part, et un circuit électronique de soustraction (16) pour établir à chaque cycle d'exposition ou mesure une différence entre ces deux rapports directement proportionnelle à la brillance de la couleur de l'échantillon.

5. Appareil selon la revendication 4, caractérisé par le fait que ledit dispositif optique se compose de fibres optiques (3) et d'un répartiteur annulaire (4), les fibres optiques (3) conduisant la lumière de la source de lumière (2) au répartiteur (4) qui forme un faisceau lumineux incident conique ou à plusieurs rayons convergeants (20, 21), et le photodétecteur (5) est placé au centre du répartiteur (4).

6. Appareil selon la revendication 4, caractérisé par le fait que ledit dispositif d'exposition est réalisé sous forme d'un disque rotatif d'exposition (6) divisé en un secteur ouvert (24), un secteur de référence noire (25) et deux secteurs de référence de couleurs semblables de brillances respectives moyenne (26) et élevée (27), ledit dispositif optique (3, 4) dirige le faisceau lumineux incident (20, 21) sur le disque d'exposition (6) entre son bord et son centre de sorte que le faisceau balaye successivement chacun desdits secteurs (24–27), et les deux circuits électroniques de comparaison (14, 15) sont conçus pour établir l'un le rapport des intensités des faisceaux lumineux réfléchis par l'échantillon (22) et le secteur de référence de couleur de brillance élevée (27 et l'autre le rapport des intensités des faisceaux lumineux réfléchis par le secteur de référence noire (25) et le secteur de référence de couleur de brillance moyenne (26).

7. Appareil selon la revendication 4, caractérisé par le fait qu'il comprend en outre un dispositif de synchronisation sous forme d'un disque rotatif de synchronisation (9) percé de trous (29–32) destinés à passer à ladite fréquence de mesure entre au moins une source lumineuse auxiliaire (10) et au moins un photodétecteur auxiliaire (11) pour produire des signaux électriques de synchronisation, et un circuit électronique de synchronisation (18) pour la régulation de moyens d'entraînement (7, 28) dudit dispositif d'exposition (6) et pour la synchronisation desdits circuits électroniques de comparaison (14, 15).

8. Appareil selon la revendication 4, caractérisé par le fait qu'il comprend en outre un dispositif de hâchage de lumière, sous forme d'un disque rotatif de hâchage (8) percé de nombreuses ouvertures (33) disposées en cercle pouvant alternativement couper et laisser passer la lumière de la source lumineuse (2) à une fréquence de hâchage déterminée, et des circuits électroniques d'amplification (12) et démodulation (13) des signaux électriques délivrés par le photodétecteur (5).

9. Appareil selon la revendication 4, caractérisé par le fait qu'il comprend en outre un dispositif d'affichage (17) pour afficher en permanence une valeur, déterminée à chaque cycle de mesure, directement proportionnelle à la brillance de la couleur de l'échantillon (22).

## Claims

1. A process for measuring the brilliance of a colour by comparison, which comprises exposing a sample to be measured, a black reference and at least one reference colour similar to that of the sample successively and cyclicly to the same incident light beam, detecting photoelectrically the light beams which are reflected successively by the sample and references establishing electronically the ratio of the intensities of the light beams reflected by the sample and by a reference colour on the one hand and by the black reference and by a reference colour on the other hand, subtracting the second ratio electronically from the first and automatically obtaining during each exposure or measurement cycle, at a determined measurement frequency, a difference which is directly proportional to the brilliance of the colour of the sample.

2. A process as claimed in claim 1, wherein two references of similar colour are used of respectively high and medium brilliance, and the ratio of the intensities of the light beams reflected by the sample and the colour reference of high brilliance on the one hand, and by the blyck reference and the colour reference of medium brilliance on the other hand is established.

3. A process as claimed in claim 1, wherein the incident light beam is chopped at a determined chopping frequency and, after the photoelectronic detection, those electrical signals are eliminated, the frequency of which differs from the chopping frequencey.

4. An apparatus for measuring the brilliance of a colour by comparison, comprising a light source, an optical device to form and direct an incident light beam onto a sample to be measured and onto a colour reference, a photodetector to produce electrical signals in response to the detection of light beams reflected by the sample and the reference, and an electronic circuit to process and compare the electrical signals, the apparatus having a black reference and at least one reference of a colour which is similar to that of the sample, an exposure device to expose successively and cyclicly to the incident light beam the sample, the black reference and a colour reference, two electronic comparison circuits to establish the ratios of the intensities of the light beams reflected by the sample and a reference colour on the one hand and the black reference and a reference colour on the other hand, and an electronic subtraction circuit to establish during each exposure or measurement cycle a difference between these two ratios which is directly proportional to the brilliance of the colour of the sample.

5. An apparatus as claimed in claim 4, wherein the optical device is composed of optical fibres and an annular distributor, the optical fibres guiding the light from a light source to a distributor which forms a conical incident light beam or a beam having several converging rays, and the photodetector is positioned in the centre of the distributor.

6. An apparatus as claimed in claim 4, wherein the exposure device takes the form of a rotary exposure disc which is divided into an open sector, a black reference sector and two reference sectors of similar colours of respectively medium and high brilliance, the optical device directs the incident light beam onto the exposure disc between its edge and its centre so that the beam successively sweeps over each of the said sectors, and the two electronic comparison circuits are designed such that one of them establishes the ratio of the intensities of the light beams reflected by the sample and by the reference sector having a colour of high brilliance, and the other establishes the ratio of the intensities of the light beams reflected by the black reference sector and the reference sector having a colour of medium brilliance.

7. An apparatus as claimed in claim 4, which also comprises a synchronisation device in the form of a rotary synchronisation disc pierced by holes which are to pass at the said measurement frequency between at least one auxiliary light source and at least one auxiliary photodetector to produce electrical synchronisation signals, and comprises an electronic synchronisation circuit to regulate driving means for the said exposure device, and to synchronise the said electronic comparison circuits.

8. An apparatus as claimed in claim 4, which also comprises a light chopping device which is in the form of a rotary chopper disc pierced by numerous openings which are arranged in a circle and are capable of alternately cutting off and letting through light from the light source at a determined chopping frequency, and comprises electronic circuits for amplifying and demodulating the electrical signals delivered by the photodetector.

9. An apparatus as claimed in claim 4, which also comprised a display device for the permanent display of a value which is determined during each measurement cycle and is directly proportional to the brilliance of the colour of the sample.

**Patentansprüche**

1. Verfahren zum Messen der Helligkeit einer Farbe durch Vergleich, dadurch gekennzeichnet, dass eine zu messende Probe, ein Schwarzreferenz und zumindest ein Farbreferenz mit einer der Farbe der zu messenden Probe ähnlichen Farbe nacheinander und zyklisch ein und demselben einfallenden Lichtstrahlenbündel ausgesetzt werden, dass auf photoelektrischem Wege die von der zu messenden Probe und den Referenzen nacheinander reflektierten Lichtstrahlenbündel ermittelt werden, dass elektronisch das Verhältnis der Intensitäten der von der zu messenden Probe und einer Referenzfarbe einerseits sowie von dem Schwarzreferenz und einer Referenzfarbe anderseits reflektierten Lichtstrahlenbündel bestimmt wird, dass das zweite Verhältnis vom ersten Verhältnis elektronisch subtrahiert und so automatisch in jedem Belichtungs- bzw. Messzyklus bei einer vorgegebenen Messfrequenz eine Differenz erhalten wird, die der Helligkeit der Farbe der zu messenden Probe direkt proportional ist.

2. Verfahren nach Anspruch 1, dadurch gekennzeichnet, dass zwei Referenzen mit ähnlichen Farben und höherer bzw. mittlerer Helligkeit verwendet werden und dass das Verhältnis der Helligkeiten der von der zu messenden Probe und dem Farbreferenz mit der Farbe höherer Helligkeit einerseits sowie von dem Schwarzreferenz und dem Farbreferenz mit der Farbe mittlerer Helligkeit anderseits reflektierten Lichtstrahlenbündel bestimmt wird.

3. Verfahren nach Anspruch 1, dadurch gekennzeichnet, dass das einfallende Lichtstrahlenbündel mit einer vorbestimmten Frequenz zerhackt wird und dass nach der photoelektronischen Ermittlung jene elektrischen Signale eliminiert werden, deren Frequenz sich von der Zerhackerfrequenz unterscheidet.

4. Vorrichtung zum Messen der Helligkeit einer Farbe durch Vergleich, mit einer Lichtquelle (2), einer optischen Einrichtung (3, 4), die ein Lichtstrahlenbündel erzeugt und auf eine zu messende Probe (22) sowie auf ein Farbreferenz richtet, einem Photodetektor (5) zur Erzeugung von elektrischen Signalen in Abhängigkeit von der Ermittlung des von der zu messenden Probe und von dem Referenz reflektierten Lichtstrahlenbündels, und einer elektronischen Schaltung zum Verarbeiten und Vergleichen der elektrischen Signale, gekennzeichnet durch ein Schwarzreferenz (25) und zumindest ein Farbreferenz (26, 27), dessen Farbe jener der zu messenden Probe ähnelt, eine Belichtungseinrichtung (6) zum aufeinanderfolgenden und zyklischen Belichten der zu messenden Probe (22), des Schwarzreferenz (25) und des Farbreferenz (26, 27) mit dem einfallenden Lichtstrahlenbündel, zwei elektronische Vergleichskreise (14, 15) zur Ermittlung des Verhältnisses der Helligkeiten des von der zu messenden Probe und von einer Referenzfarbe reflektierten Lichtstrahlenbündels einerseits sowie des vom Schwarzreferenz und einer Referenzfarbe reflektierten Lichtstrahlenbündels anderseits, und einen elektronischen Subtrahierkreis (16), mit dem in jedem Belichtungs- bzw. Messzyklus die Differenz der beiden Verhältnisse bestimmt wird, die direkt proportional zur Helligkeit der Farbe der zu messenden Probe ist.

5. Vorrichtung nach Anspruch 4, dadurch gekennzeichnet, dass die optische Einrichtung aus optischen Fasern (3) und einem ringförmigen Verteiler (4) besteht, wobei die optischen Fasern (3) das Licht von der Lichtquelle (2) zum Verteiler (4) leiten, welcher ein einfallendes Lichtstrahlenbündel bildet, das konisch ist oder mehrere konvergierende Strahlen (20, 21) aufweist, wobei der Photodetektor (5) in der Mitte des Verteilers (4) angeordnet ist.

6. Vorrichtung nach Anspruch 4, dadurch gekennzeichnet, dass die Belichtungseinrichtung in Form einer drehbaren Blendenscheibe (6) ausgebildet ist, die in einen offenen Sektor (24), einen Schwarzreferenz-Sektor (25) und zwei Farbreferenzsektoren (26, 27) mit ähnlichen Farben und mittlerer bzw. höherer Helligkeit unterteilt ist, wobei die optische Einrichtung (3, 4) das auf die Blendenscheibe (6) fallende Lichtstrahlenbünden (20, 21) zwischen deren Rand und deren Mitte richtet, derart, dass das Bündel nacheinander jeden der Sektoren (24–27) überstreicht, und dass die beiden elektronischen Vergleichskreise (14, 15) so ausgebildet sind, dass einer das Verhältnis der Intensitäten der von der zu messenden Probe (22) und vom Farbreferenzsektor (27) mit der Farbe höherer Helligkeit reflektierten Lichtstrahlenbündel bestimmt, wogegen der andere das Verhältnis der Intensitäten der vom Schwarzreferenz-Sektor (25) und vom Farbreferenz-Sektor (26) mit der Farbe mittlerer Helligkeit reflektierten Lichtstrahlenbünden bestimmt.

7. Vorrichtung nach Anspruch 4, gekennzeichnet durch eine Synchronisiereinrichtung in Form einer drehbaren Synchronisierscheibe (9), die mit Durchtrittsöffnungen (29–32) versehen ist, welche sich mit der Messfrequenz zwischen zumindest einer Hilfslichtquelle (10) und zumindest einem Hilfsphotodetektor (11) bewegen, um elektrische Synchronisiersignale zu erzeugen, und eine elektronische Synchronisierschaltung (18) zum Regeln der Antriebsmittel (7, 28) der Belichtungseinrichtung (6) und zum Synchronisieren der elektronischen Vergleichskreise (14, 15).

8. Vorrichtung nach Anspruch 4, gekennzeichnet durch einen Lichtzerhacker in Form einer drehbaren Zerhackerscheibe (8), die von zahlreichen Öffnungen (33) durchsetzt ist, welche auf einem Kreis liegen und abwechselnd das Licht der Lichtquelle (2) mit einer vorbestimmten Zerhakkerfrequenz unterbrechen und durchlassen, und durch elektronische Verstärker- (12) und Demodulatorkreise (13) für die vom Photodetektor (5) gelieferten elektrischen Signale.

9. Vorrichtung nach Anspruch 4, dadurch gekennzeichnet, dass sie ferner eine Einrichtung (17) zur permanenten Anzeige eines Wertes aufweist, der in jedem Messzyklus ermittelt wird und direkt proportional der Helligkeit der Farbe der zu messenden Probe (22) ist.

FIG.1

FIG.2

FIG.3

FIG.4

FIG. 5